# EUROPEAN PATENT APPLICATION

(11) **EP 4 407 822 A1**
(43) Date of publication of application: **31.07.2024**
(21) Application number: 23153954.5
(22) Date of filing: 30.01.2023
(51) Int. Cl.: H02G 3/04, E01C 11/22, H02G 9/04, H02G 9/06

(54) **A POWERLINE CARRIER**

(71) Applicant: Tabet Benslimane, Hassan, 9240 Zele (BE)
(72) Inventor: Tabet Benslimane, Hassan, 9240 Zele (BE)
(74) Representative: IP HILLS NV

(57) **Abstract**

A powerline carrier adapted to carry powerlines on one or more curb stones is provided, the powerline carrier being an elongate volume, elongate in a longitudinal direction and having a transverse cross section adapted to be partially sunken in said one or more curb stones. The circumference of the transverse cross section comprises a first part adapted to contact the one or more curb stones. The section comprises a second part defining the outer side of the powerline carrier oriented away from the one or more curb stones. The powerline carrier comprises at least one housing for holding at least one, optionally only one power point, the power point being accessible at the outer side of the powerline carrier. The volume comprises at least a first tubular channel extending in said longitudinal direction, this first tubular channel having one outer end near or at one of the transverse sides of the volume, and this first tubular channel is adapted to hold one or more power cables in the longitudinal direction of the powerline carrier. At least one cable or wire is provided in said first tubular channel between one of the transverse sides of the volume and one or more of the at least one housing.

## Description

### Field of the Invention

The present invention generally relates to a powerline carrier adapted to carry powerlines on or along one or more curb stones of a curb, and to a method to provide a curb with an integrated power point or power points.

### Background of the Invention

Today, the use of electrically powered cars and hybrid cars is being encouraged. It is therefore important to be able to charge electric vehicles and hybrid vehicles (EVs) in an easy and easily accessible manner. Seen the currently limited capacity of the batteries in these vehicles, in particularly the hybrid vehicles, public power points for charging vehicles are to be numerous and easily accessible. Public power points are usually provided in the street scene. However, the installation of these power points is subject to a strict admission policy, the power points are often regarded as disruptive and are exposed to impact and/or damage caused by collisions with users, not only cars and trucks, but cyclists as well.

Placing a private power point at some or every house or private parking space is often simply not feasible from a spatial point of view, certainly not along municipal or urban, often busy streets. Such power points may be placed on the facade or in carports of houses. These power points are only to be used by the owner of the house. If the parking space for the car is along the street in front of this house, a cable must be laid over the footpath and, if applicable, the cycle path./ These cables pose a safety risk and are often not allowed by the municipality or the city.

Moreover, installing power points, both public or private, is labour-intensive. A plinth must be cast to place the power points, which requires, among other things, an initial excavation, and a second pit is to be made to electrically connect the power points to the power distribution network.

Charging or power points being provided along the curb side of a road or parking lot, are more easily accessible, as proposed in GB2572752 and GB2597742. However, the provision of such integrated power points in curbs remains difficult to realize and is still time and work intensive, usually requiring at least the replacement of the whole curb.

### Summary of the Invention

The major problem at present is that providing such power points in or on curbs is work-intensive, cumbersome and time consuming. Hence it is an objective to provide a method to install power points along curbs, even integrated in the curbs, in an easy and quick way. It is also an objective of the invention to provide means allowing such easy and quick installation.

According to a first aspect of the present invention, a powerline carrier adapted to carry powerlines on one or more curb stones is provided, the powerline carrier being an elongate volume, elongate in a longitudinal direction and having a transverse cross section adapted to be partially sunken in said one or more curb stones. The circumference of the transverse cross section comprises a first part adapted to contact the one or more curb stones. The section comprises a second part defining the outer side of the powerline carrier oriented away from the one or more curb stones. The powerline carrier comprises at least one housing for holding at least one, optionally only one power point, the power point being accessible at the outer side of the powerline carrier. The volume comprises at least a first tubular channel extending in said longitudinal direction, this first tubular channel having one outer end near or at one of the transverse sides of the volume, and this first tubular channel is adapted to hold one or more power cables in the longitudinal direction of the powerline carrier. At least one cable or wire is provided in said first tubular channel between one of the transverse sides of the volume and one or more of the at least one housing. Possibly, one or more of the housings is adapted to hold a plurality of power points, between each of said housings for carrying a plurality of power points and the one of the transverse sides of the volume, at least the same number of cables or wires is provided in said first tubular channel, as the number of power points to be carried by the housing.

Possibly between one of the transverse sides of the volume and each of the at least one housing, at least one cable or wire is provided in said first tubular channel. Possibly between one of the transverse sides of the volume and each of the at least one housing, one power cable is provided in said first tubular channel. Possibly between one of the transverse sides of the volume and each of the at least one housing, one data cable is provided in said first tubular channel. Possibly between one of the transverse sides of the volume and each of the at least one housing, one power cable and one data cable is provided in said first tubular channel. Possibly between one of the transverse sides of the volume and each of the at least one housing, one cable is provided in said first tubular channel, said cable comprises one or more data carrying conductors and one or more, such as 3, 4, or 5 current conductors.

According to some embodiments, for each of the at least one housings, a pass through opening for conducting at least one power cable between the first tubular channel and the at least one housing may be provided, the at least one cable or wire being provided in said pass through opening.

The transverse cross section is a section according to a plane perpendicular to the longitudinal direction. A longitudinal cross section is a section according to a plane parallel to the longitudinal direction.

The transverse cross section is substantially identical along the longitudinal direction in the zones of the powerline carrier where a housing for holding a power point is absent.

The power line carrier may comprise more than one housing for holding a power point such as 2, 3, 4, 5, 6, 7, 8, 9, 10 or more housing for holding a power point. Optionally the housing may be designed to house more than one power point, e.g. 2, 3, 4 or more power points. Preferably the power line carrier comprises one to seven housings, each housing adapted to hold a power point.

Possibly the housings may be provided in pairs, one adjacent to the other in longitudinal direction. The housings may have an opening to receive a plug from a user. The openings may be oriented away from each other in longitudinal direction, or may both face the same lateral side of the powerline carrier.

According to some embodiments, the at least one cables or wires may be pull wires in said first tubular channel.

According to some embodiments, at least one cables or wires may be power cables in said first tubular channel.

Preferably one power cable per housing, and possibly one power cable per power point which may be housed in the housing, is provided.

According to some embodiments, the powerline carrier may comprise one or more data cables in said first tubular channel.

According to some embodiments, the powerline carrier may comprise M housings for holding a power point, M being an integer equal or more than 1, said powerline carrier comprises M data cables in said first tubular channel.

According to some embodiments, the powerline carrier may comprise N housings for holding a power point, N being an integer equal or more than 1, said powerline carrier comprises N power cables in said first tubular channel.

Each power cable may comprise a plurality of current conductors, each adapted to carry a phase of the alternating current or direct current top the power point. As an example, each of the power cables may comprise 5 current conductors, 3 conductors being so-called live conductors to carry a phase of the current, cone conductor to carry or being the neutral conductor, and one conductor being the earth conductor. Each power cable may further comprise one or a plurality of data carrying conductors, adapted to carry data from or to the housing or the power point. Each power cable may be a power cable in which the current and possibly the data carriers, each insulated, are carried in a substantially circular polymer jacket. Alternatively the power cable in which the current and possibly the data carriers, each insulated, are carried in a substantially rectangular polymer jacket, in which the current carriers may be organised one adjacent to the other in a plane, the plane being parallel to the long side of the rectangular cross section. The data carriers may also be organised one adjacent to the other in a plane, or may be provided as a strand of mutually insulated data carriers, said strand being substantially parallel to the data carriers.

According to some embodiments, , the power cables may comprise a substantially rectangular outer circumference, the power cables being provided stacked in the first tubular channel.

The first tubular channel may have a substantially rectangular cross section, two parallel sides of the rectangular cross section being substantially parallel to the long side of the substantially rectangular outer circumference of the power cables. These two parallel sides of the rectangular cross section may be oriented such that they are substantially horizontal when the powerline carrier is in use. Understanding the second part of the circumference of the traverse cross section of the powerline carrier, defining the outer side of the powerline carrier oriented away from the one or more curb stones, being understood as defining the top of the powerline carrier, the order of the power cables being layered hence stacked in the first tubular channel, is such that the power cable which is provided to the first housing closest to the one of the transverse sides of the volume, is the uppermost power cables in the stack of power cables. For each subsequent housing from this first housing, the power cable which is provided to this subsequent housing, is the subsequent power cable downwards in the stack of power cables away from the top of the powerline carrier.

According to some embodiments, the powerline carrier or carriers, at the end of the powerline present at the housing, may be provided with one or more plugs adapted to plug into a power point.

According to some embodiments, the powerline carrier may comprise a power point in at least one of the at least one housing for holding a power point, optionally holding one power point in each of the at least one housing for holding a power point.

According to some embodiments, the power point is electrically coupled to one of the power cables in the first tubular channel. This may be done by means of the plug or plugs provided to the end of the power cable, being inserted in the appropriate sockets of the power point or power points inserted in the housing.

According to some embodiments, the at least one housing for holding a power point may be provided with a closing lid, optionally hingedly connected to the housing, the closing lid being adapted to liquid tightly close the housing from the environment at the outer side of the powerline carrier.

According to some embodiments, between the housing and the closing lid, a lock may be provided, preventing to open the closing lid without unlocking the lock.

The lock may be a key operated lock, an electrically operated lock or any suitable type of lock.

The transverse cross section, adapted to be partially sunken in said one or more curb stones, may be substantially rectangular, with a surface serving as the surface in which the housings for the power point are present and being referred to a s the top surface, is slightly curved. The first part may be the side of the rectangular cross section opposite to this top surface, together with a part of, or the complete adjacent upstanding sides. Hence the second part is the top surface.

The powerline carrier may comprise a first part, adapted to be sunken in the curb stone or stones, which comprises at least two pairs of a first and a second segment.

According to some embodiments, the first part may comprise at least two pairs of a first and a second segment, the segments of said pairs of segments being adapted to be brought in contact with the one or more curb stones, for each of said pairs of segments, the first and second segment form the legs of an angle oriented outwards the volume of the powerline carrier, which angle is equal or more than 90° and less than 180°.

The transverse cross section may have a mushroom shape with a stem oriented down, the stem possibly ending at a point. The second segment may be the side of the stem, while the lower side of the cap provides the first segments.

An angle oriented outwards the volume of the powerline carrier, hereinafter also referred to as outer angle, means the angle formed at the side of the legs, which does not comprise a part of, hence is oriented away from the volume.

The outer angle between the first and second segment, is preferably in the range of 90° to 180°.

The two first segments preferably are parallel, more preferably coplanar.

According to some embodiments, for the transverse cross section, the two lines, each line coinciding with one to the first segments of the at least two pairs of a first and a second segment, divide the cross section in an upper portion delimited by these two lines and the second part of the section, and a lower portion at least partially delimited by these two lines and the second segments of the at least two pairs of a first and a second segment, said first tubular channel being located in the lower portion.

According to some embodiments, for the transverse cross section, the two lines, each line coinciding with one to the first segments of the at least two pairs of a first and a second segment, divide the cross section in an upper portion delimited by these two lines and the second part of the section, and a lower portion at least partially delimited by these two lines and the second segments of the at least two pairs of a first and a second segment, said housings of said at least one housing for holding a power point being located in the lower portion.

Possibly, each housing is provided with one or more tell-tale lights. The tell-tale lights may inform the environment of the status of power point housed in the housing, like available for providing power, unavailable for providing power, defect, locked, unlocked, and many more. The combination of switched or unswitched tell-tale lights may provide the information.

The housing may be provided with illumination, in order to assist the user to insert a power plug in the power point. The power point may comprise a socket electrically couplable to a power plug.

Possibly, each housing may be provided with a code, like a QR code or alike, or with a holder to hold a code; like a QR code or alike. This code may provide the user with suitable information on a data providing means, like a smartphone or alike.

This code, like a QR code may be used to identify the power point, and to enable to switch on or off the power supply to this power point, and/or to lock or unlock the lock of this power point, e.g. via remote control or via a non-wired connection to a control device controlling the status and power supply to one or more power points.

According to some embodiments, for the transverse cross section, the two lines, each line coinciding with one to the second segments of the at least two pairs of a first and a second segment, are non-parallel, the second segments intersecting at a bottom point of the cross section.

As such, from the angles of the first and second segments towards the bottom point, a triangular wedge is defined. This has the advantage that for applying the powerline carrier to existing curb stones, the only a wedge shaped insertion is to be provided on the top side of the curb stones. The wedge is preferable identical to the wedge shape defined by the second segments of the pairs of segments, such the powerline carrier smoothly can be laid and inserted in the wedge in the curb stones. Obviously a connection between the curb stone wedge and the powerline carrier may be provided, like a glue or an adhesive. The wedge in the curb stones, being triangular shaped, may be grinded in the curb stones.

Alternatively from the angles of the first and second segments towards the bottom point, a trapezoidal wedge may be defined, by providing a lower segment delimiting the second segments of the pairs of segments at their side pointing away from the angles made with the first segments of the pairs of segments.

The angle between the two second segments, measured at the intersection of the two segments, possibly at the bottom point is preferably in the range of 0 to 120°, e.g. 0 to 90°.

Possibly, along the second segments towards the bottom point or the lower segment, barbs may be provided having their top oriented towards the bottom point or the lower segment. These barbs may prevent the powerline carrier to be easily pulled out of the wedge made in the curb stones once inserted.

According to some embodiments, the second part defining the outer side of the powerline carrier oriented away from the one or more curb stones may be a curved outer side.

According to some embodiments, the power line carrier may comprise polymeric material, such as natural or artificial and optionally recycled rubber.

Optionally the polymeric material comprises reinforcing elements, like reinforcing fibers or sheets, e.g. metal wire sheets or glass fibers of glass fiber woven sheets.

Possibly the first tubular channel is provided by a tubular element. Possibly the powerline carrier comprises more than one tubular channel.

Possibly the powerline carrier is provided with bolt openings along the lateral sides of the powerline carrier. This to allow the powerline carrier to be bolted to the curb stone or curb stones. These bolt openings may extend thought the volume of the powerline carrier from the second part defining the outer side of the powerline carrier oriented away from the one or more curb stones through the first segment of the first part.

According to some embodiments, the powerline carrier may comprise at one longitudinal end one or more sockets, each adapted to couple to one or more of the powerlines to be carried, and at the other longitudinal end one or more plugs, each adapted to couple to one or more of the powerlines to be carried and adapted to be electrically coupled the one or more sockets of an adjacent powerline carrier.

According to some embodiments, the first part of the circumference of said transverse cross section may comprise at least one stuffing box for holding a seal or joint to be provided between the first part and the surface of the curb stone or stones.

According to some embodiments, the powerline carrier may comprise is adapted to be rolled up on a coil, said coil preferably having a diameter less than 10m and possibly having a diameter of more than 1m.

The length of a powerline carrier according to the invention is preferably more than 10m, such as in the range of 10m to 50m.

Alternatively, the powerline carrier is provided as a strip, such as a substantially flat strip, preferably having a length up to 14m, e.g. in the range of 1m to 13.6m, more preferably in the range of 10m to 13.5m.

According to some embodiments, the powerline carrier comprises, even may consists of, an upper and a lower, mutually separatable piece, separatable along a surface said surface for each transverse cross section along the longitudinal direction, defining the two lines, each line coinciding with one to the first segments of the at least two pairs of a first and a second segment, divide the cross section in an upper portion delimited by these two lines and the second part of the section, and a lower portion at least partially delimited by these two lines and the second segments of the at least two pairs of a first and a second segment, said first tubular channel being located in the lower portion.

The upper and a lower, mutually separatable piece may be joined by adhesive of glue, thereby forming the powerline carrier. Providing the powerline carrier in two pieces facilitate an easier installation of the powerline carrier on existing or freshly mounted or casted curb stones or curbs.

A powerline carrier may comprise an upper and a lower separatable portions, together forming the powerline carrier. The lower separatable portion provides at least piece of the first part of the transverse cross section adapted to be partially sunken in said one or more curb stones. The upper separatable portion provides the first part of the transverse cross section, and optionally also a piece of the first part of the transverse cross section adapted to be partially sunken in said one or more curb stones. The lower separatable portion comprises said at least a first tubular channel, while the upper separatable portion comprises said at least one housing for holding at least one, optionally only one power point. So according to a second aspect of the invention, a kit of parts is provided, the kit comprises an upper and a lower separatable portions, together forming the powerline carrier according to the first aspect of the present invention.

The upper and lower portion may be made separate and joined once provided. The upper and lower portion may be handled separately and be joined when the lower portion has been mounted on or in the curb stone or curb stones.

The coupling of the upper and a lower mutually separatable portion may be provided by any suitable means to join the two portions. The upper portion may comprise one of the male or female part of a snap lock system, the lower portion comprising the other of the male or female part of a snap lock system.

One or both of the touching surfaces of the upper and a lower mutually separatable portions may comprise a stuffing box to receive a seal between the upper and lower portion.

According to a third aspect of the invention, a curb stone insert is provided, the curb stone insert being an elongate volume, elongate in a longitudinal direction and having a transverse cross section. The curb stone insert is adapted to be partially sunken in said one or more curb stones. The circumference of said transverse cross section comprises a least a first part adapted to contact the one or more curb stones, the volume comprising at least a first tubular channel extending in said longitudinal direction, said first tubular channel having one outer end near or at one of the transverse sides of the volume, said first tubular channel is adapted to hold one or more power cables in the longitudinal direction of the powerline carrier, at least one cable or wire is provided in said first tubular channel. This curb stone insert may provide the first part adapted to contact the one or more curb stones of the circumference of the transverse cross section of a powerline carrier according to the first aspect of the invention, and/or the lower part of a kit of parts according to the second aspect of the invention. The features of the first part adapted to contact the one or more curb stones of the circumference of the transverse cross section of a powerline carrier according to the first aspect of the invention thus may apply for this curb stone insert according to the third aspect of the invention.

According to a fourth aspect of the invention, a curb stone addon is provided, the curb stone addon being an elongate volume, elongate in a longitudinal direction and having a transverse cross section. The curb stone addon is adapted to be added on the top surface of one or more curb stones. The circumference of said transverse cross section comprises a part defining the outer side of the curb stone addon oriented away from the one or more curb stones. The curb stone addon comprises at least one housing for holding at least one, optionally only one power point, the power point being accessible at the outer side of the curb stone addon. This curb stone addon may provide the second part of the transverse cross section of a powerline carrier according to the first aspect of the invention, and/or the upper part of a kit of parts according to the second aspect of the invention. The features of the second part of the circumference of the transverse cross section of a powerline carrier according to the first aspect of the invention thus may apply for this curb stone addon according to the fourth aspect of the invention.

According to a fifth aspect of the invention, a curb stone coverup is provided, the curb stone coverup being an elongate volume, elongate in a longitudinal direction and having a transverse cross section. The curb stone coverup is adapted to be added on the top surface of one or more curb stones. The circumference of said transverse cross section comprises a part defining the outer side of the curb stone coverup oriented away from the one or more curb stones. The curb stone coverup may have the same transverse cross section of a curb stone addon according to the fourth aspect of the invention, while lacking, hence being free of, the housings for housing power points. This curb stone coverup may be used in combination with a curb stone insert according to the third aspect of the invention, instead of a curb stone addon. This curb stone coverup may be coupled to the curb stone insert in the same or a similar way as the curb stone addons, hence these features of the curb stone addons may apply to the curb stone coverup as well.

Combining one or more curb stone inserts with one, or even more, curb stone addons and one or more curb stone coverups, provide the possibility to provide power points along a length of a curb, which length is longer than the length of one curb stone addon. Alternating curb stone addons and curb stone coverups, provide more freedom to define the position of power points along the length of a curb.

Hence according to an embodiment of the present invention, a kit of parts is provided, the kit of parts comprises at least one, possibly more than one, curb stone inserts according to the third aspect of the invention, at least one, and possibly more than one, curb stone addons according the fourth aspect of the invention, and optionally one or more curb stone coverups according the fifth aspect of the invention.

Possibly, the kit of parts may further comprise bend element or elements in order to allow the power lines and optionally the tubular channel or channels, and hence the power lines, to bend away from the elongate direction e.g. towards a side of the road or field from which the curb is part of. Possibly, the kit of parts may further comprise end piece element or elements to others close the tubular channel at a transverse side when this channel debouches at one or both transverse sides of the powerline carrier.

According to a sixth aspect of the invention, a method to provide integrated power points to a curb is provided. The method comprises the steps of
- Providing a curb comprising one or more curb stones having a wedge in the visible surface of the curb stone or curb stones;
- Providing a powerline carrier according to any one of the preceding claims;
- Coupling the powerline carrier to the one or more curb stones.

The latter step may include
a) Inserting the first parts of the transverse cross section of a powerline carrier in the wedge provided in the one or more curb stones;
b) providing at least one housing for holding a power point with a power point;
c) providing one or more power lines in the at least first tubular channel
d) electrically coupling a power point or power points to the one or more power lines;
e) inserting a power point or power points in one or more housings.

Possibly the steps b, c, d and e are done prior to step a. Alternatively the step a is done prior to the steps b, c, d and e, b, c, d and e done in this order.

Possibly the steps c, d and e are done prior to step a, which on its turn is done prior to step b. Alternatively the step a is done prior to the steps b.

According to some embodiments, when the powerline carrier comprises, or even consists of an upper and a lower, mutually separatable piece, coupling the powerline carrier to the one or more curb stones may comprise
a)
   1.) Inserting the lower part of the powerline carrier in the wedge provided in the one or more curb stones
a)
   2.) Connecting the upper part of the powerline to the lower part of the powerline carrier;
b) providing at least one housing for holding a power point with a power point;
c) providing one or more power lines in the at least first tubular channel
d) electrically coupling the power point or power points to the one or more power lines and inserting the power point or power points in the housings.

Optionally step a1 comprises adhering the lower part of the powerline carrier to the curb stone or curb stones in the wedge being provided. Optionally step c is done after stap a1 and before stap a2.

Providing a curb comprising one or more curb stones having a wedge in the visible surface of the curb stone or curb stones may comprise grinding or milling a wedge in the one or more curb stones of an installed, e.g. existing curb. Alternatively, one or more curb stones having a wedge in the visible surface of the curb stone or curb stones are provided, and installed as a curb, prior to the provision of the powerline carrier. Alternatively, one or more curb stones having a wedge in the visible surface of the curb stone or curb stones are casted in situ, thereby providing the curb, prior to the provision of the powerline carrier. Alternatively, one or more curb stones having a visible surface of the curb stone or curb stones are casted in situ, after which a wedge is made, like grinded or cut, in the visible surface of the curb stone or curb stones, thereby providing the curb, prior to the provision of the powerline carrier.

The power lines are to be electrically coupled to the power grid. A distribution means, like a distribution box may be provided to couple the power lines to the power grid. If provided, the data cables may also be connected to a control means, thereby allowing to control, based amongst others upon the data obtained via the data cables, the distribution of electrical power to one or more of the power points.

The distribution means may comprise the switches to switch the power to or from each of the power cables present in the powerline carrier once installed. The distribution means may hold the processing unit to amongst other control the status of the power points connected to the distribution means, to control the locking and unlocking of the locks on the power points if applicable, and many more. The processing unit may comprise a measuring unit to measure the power of current consumed by each of the power points. The distribution means may also comprise the communication unit to communicate information, like status of the power points, the amount of current consumed over a certain period in time, and alike, with an external power provider, selling the current consumed at the power points to customers charging their vehicle at one of the power points.

### Brief Description of the Drawings

Fig. 1 to fig. 5 and fig.7 illustrate schematically powerline carriers according to the invention.
Fig. 6 schematically illustrates powerline carriers according to the invention, which are composed of a kit of parts according to the present invention.
Fig. 8 schematically shows a transverse cross section of a powerline carriers according to the invention, which are composed of a kit of parts according to the present invention, where the curb stone insert and the curb stone addon of the kit of parts is visible.
Fig. 9 schematically shows a transverse cross section of the powerline carrier of figure 8, at a location where the powerline carrier cross section is composed of a kit of parts according to the present invention, where the curb stone insert and the curb stone coverup of the kit of parts is visible. Fig. 10 shows schematically a longitudinal cross section of the powerline carrier according to the plane BB' of figure 8.
figure 11 shows schematically the powerline carrier shown in figure 9 in an, installed scheme.

In the different figures, the same reference signs refer to the same or a similar feature.

### Detailed Description of Embodiment(s)

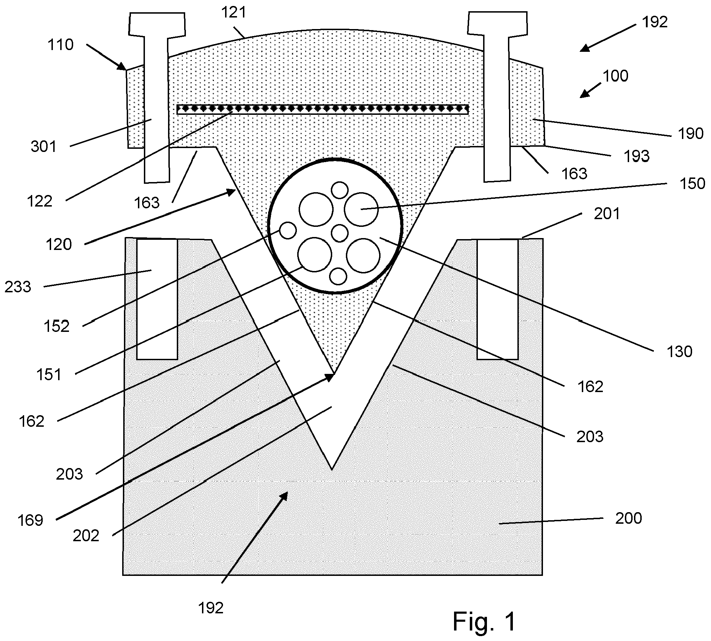

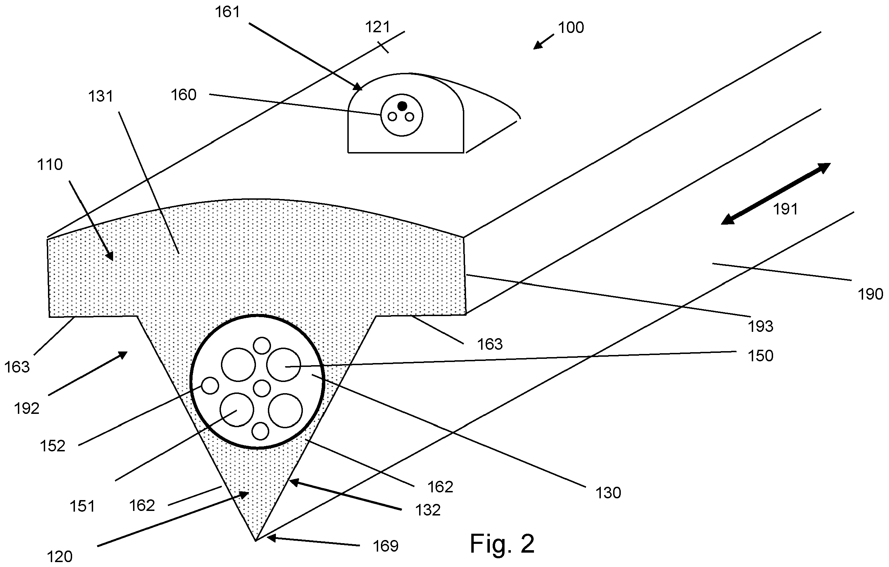

A powerline carrier 100 which is adapted to carry powerlines 150 on one or more curb stones according to the first aspect of the invention is showing in figure 1. A traverse cross section of a powerline carrier 100 which is adapted to carry powerlines 150 on one or more curb stones according to the first aspect of the invention is showing in figure 2. The powerline carrier comprises an elongate volume 190, elongate in a longitudinal direction 191 and having a transverse cross section 192, shown in figure 1, adapted to be partially sunken in one or more curb stones 200. The circumference 193 of the transverse cross section 192 comprises a first part 110 adapted to contact the one or more curb stones. The transverse cross section 192 also comprises a second part 120 defining the curved outer side 121 of the powerline carrier 100 oriented away from the one or more curb stones 200. The powerline carrier 100 comprises at least one housing 161 for holding at least one, optionally only one power point 160, which power point 160 is accessible at the outer side 121 of the powerline carrier 100. The volume 190 comprises at least a first tubular channel 130 extending in the longitudinal direction and has one outer end 131 near or at one of the transverse sides 132 of the volume 190. This first tubular channel 130 is adapted to hold one or more power cables 151 in the longitudinal direction 191 of the powerline carrier 100. The cables and/or wires are provided in the first tubular channel 130 between one of the transverse sides 132 of the volume 190 and the housing or housings 161.

As shown in figure 1, the powerline carrier 100 may be provided with holes 300 for receiving bolts 301, the bolt being adapted to placed and hold the powerline carrier 100 to the to surface 201 of the curb stones 200. The bolts are bolted into sleeves inserted in holes 233 made in the curb stones 200.

In the embodiment in figure 1 and 2, the powerline carrier 100 is made of one integral part made out of rubber or polymer. In the upper, second part 120, a reinforcing means, like a textile nonwoven or woven fiber tissue, e.g. a glass fiber or filament woven fabric 122 may be provided. Four power lines 150, being four power cables 151 are provided in the first tubular channel 130, together with four data carrying cables 152.

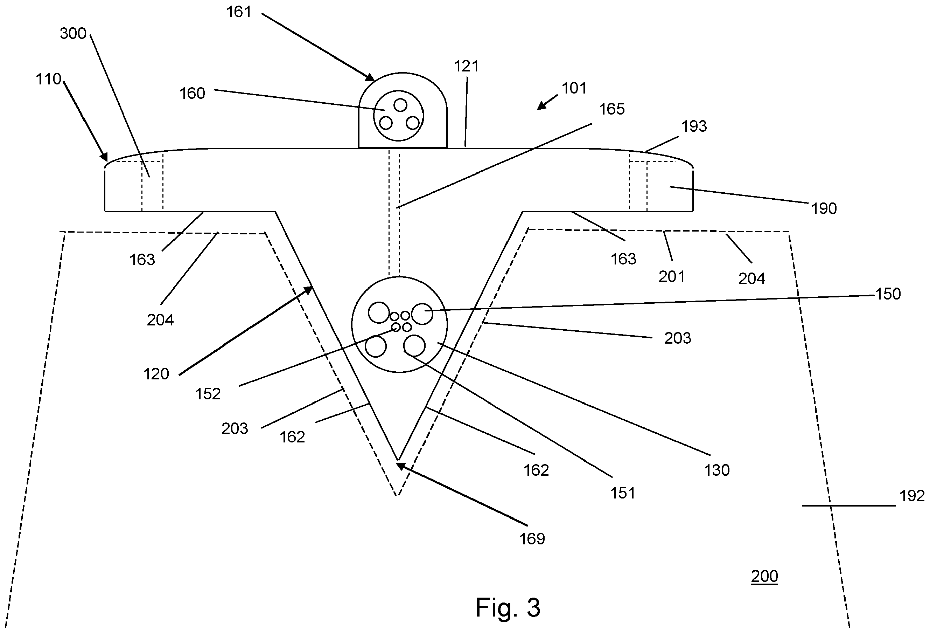

Figure 3 shows a further view of a traverse cross section of a powerline carrier 101 which is adapted to carry powerlines 150 on one or more curb stones according to the first aspect of the invention. The same reference signs refer to similar or identical elements and features as described for the powerline carrier 100 in figure 1. A pass through opening 165, here a tubular opening, for conducting at least one power cable between the first tubular channel 130 and the housing 161 is provided.

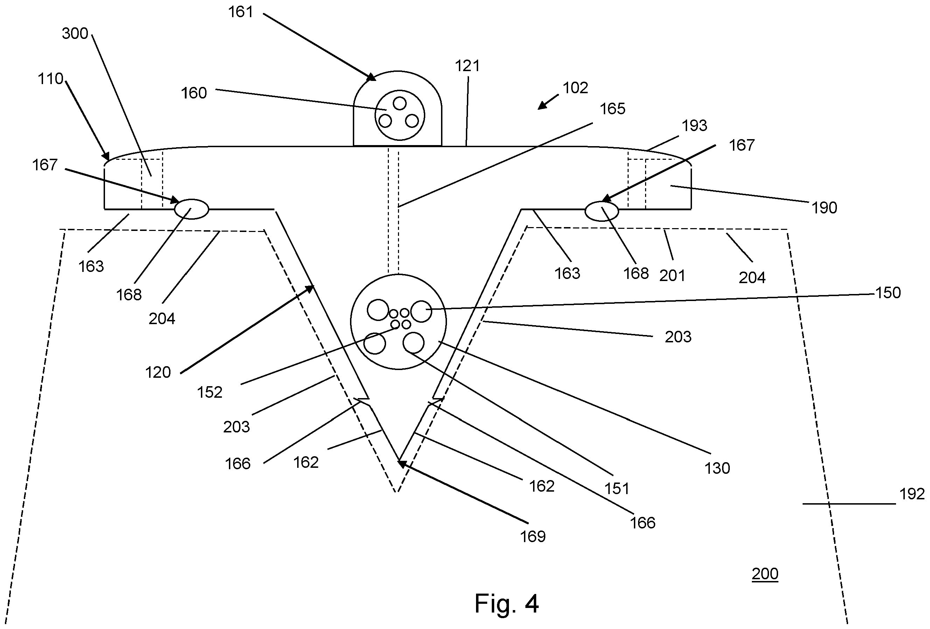

Figure 4 shows a further view of a traverse cross section of a powerline carrier 102 which is adapted to carry powerlines 150 on one or more curb stones according to the first aspect of the invention. The same reference signs refer to similar or identical elements and features as described for the powerline carrier 100 in figure 1. A pass through opening 165, here a tubular opening, for conducting at least one power cable between the first tubular channel 130 and the housing 161 is provided.

At the lower side of first part 110 of the circumference 193 of the transverse cross section 192, barbs 166 are provided, which may prevent the powerline carrier 102 to be pulled upward easily out of the wedge, also referred to as recess, made in the curb stones, in which a part of the first part 110 of the circumference 193 of the transverse cross section 192 is sunken. The circumference 193 of the transverse cross section 192 is provided with two stuffing boxes 167, one at each lateral side of the powerline carrier 102, for holding a seal 168 to be provided between the first part 110 and the surface 201 of the curb stone or stones 200.

In figures 1, 2, 3 and 4, the surface 201 of the curb stone or stones 200 oriented upwards the curb stone, is substantially flat and horizontal. A V-shaped recess 202 is provided in the surface of the curb stone, which can be provided fairly easily by grinding two cuts 203, one cut along one of the legs of the V-shaped recess. At the upper side of the surface 201, two substantially horizontal planes 204 are provided. The lower side of first part 110 of the circumference 193 of the transverse cross section 192, ends at an apex 169. The part of the first part 110 of the circumference 193 of the transverse cross section 192 being sunken in the V-shaped recess 202, hence has a V-shaped form, defined by the apex 169, two upwards flanks 162 and two substantially horizontal flanks 163.

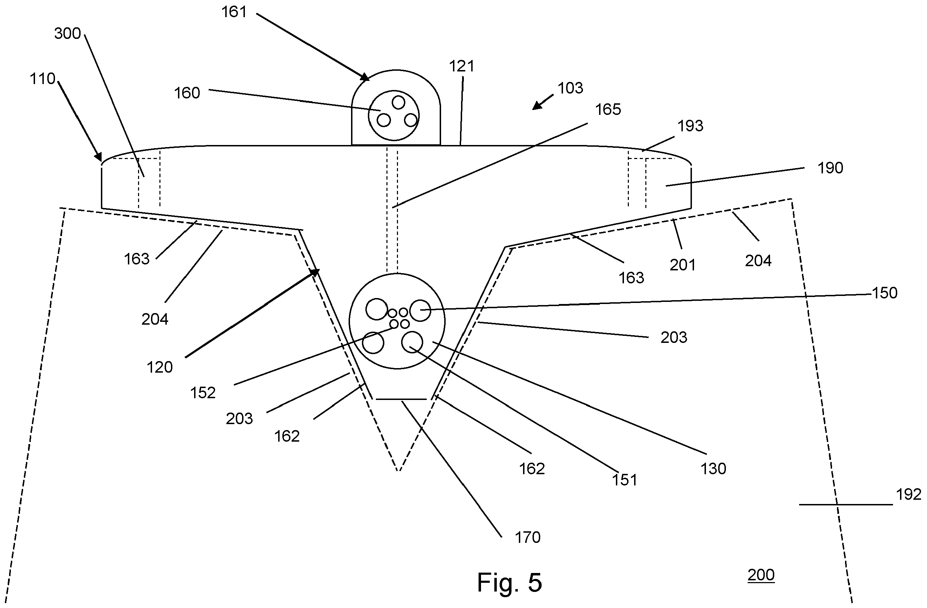

Figure 5 shows a further view of a traverse cross section of a powerline carrier 103 which is adapted to carry powerlines 150 on one or more curb stones according to the first aspect of the invention. In this embodiment, the two flanks 162 are not coinciding at an apex, but the flanks 162 being truncated by a lower flank 170. The two flanks 163 are not horizontal but inclined downwards. At the upper side of the surface 201 of the curb stone, two inwards inclined planes 204 are provided, e.g. by grinding.

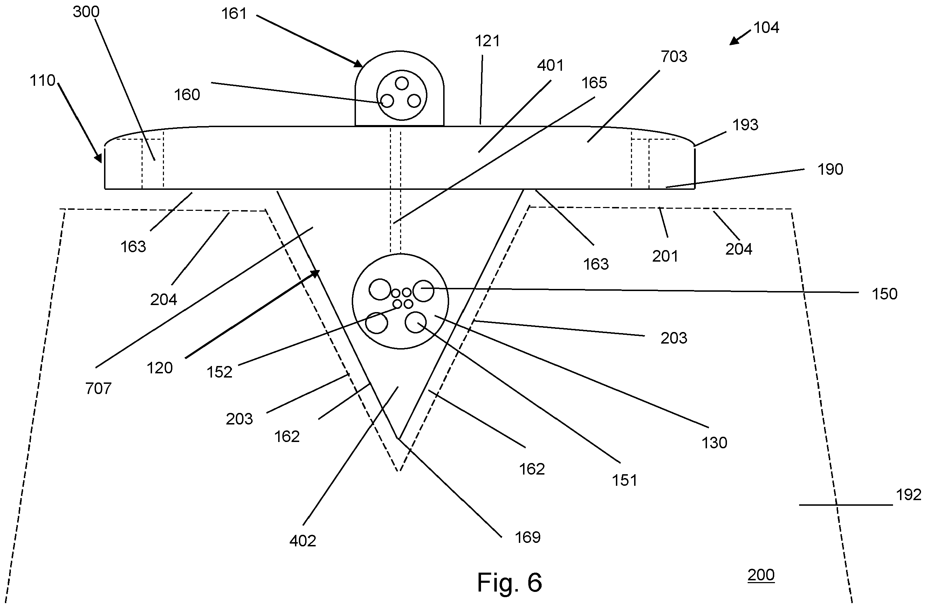

For all the embodiments shown in figure 1 to 5, as well as the embodiments in figures 6 to 8, the two flanks 162 and the two flanks 163 provide a first pair of a first segment (being each of the flanks 162) and a second flank (being the respective adjacent flank 163), for which the angle between the first and second segment is equal to or more than 90° and less than 180°. The volume of the powerline carrier may be provided from polymer, like extruded or mould injected polymer, optionally recycled polymer, like hard PVC, PE, PP, HDPE, HDPP, epoxy or composite or rubber. The power lines may be provided with plugs and/or sockets (not shown in the figures) to allow a power line from one powerline carrier to be electrically connected to a power line of an adjacent powerline carrier.

Figure 6 shows a further view of a traverse cross section of a powerline carrier 104 which is adapted to carry powerlines 150 on one or more curb stones according to the first aspect of the invention. The powerline carrier 104 comprises a first, upper portion 401 and a second, lower portion 402, together forming the powerline carrier 104. The first, upper portion 401 provides a curb stone addon 703 according to the 4th aspect of the invention. The second, lower portion 402 provides a curb stone insert 707 according to the 3th aspect of the invention. Together the first and second portion form a powerline carrier 104. This first, upper portion 401 and a second, lower portion 402 together form a kit of parts according to the 2nd aspect of the invention. The first, upper portion 401 and a second, lower portion 402 being connected, e.g. glued or welded one to the other, together form a powerline carrier 104 which may be similar, even identical to the powerline carrier 101 of figure 3.

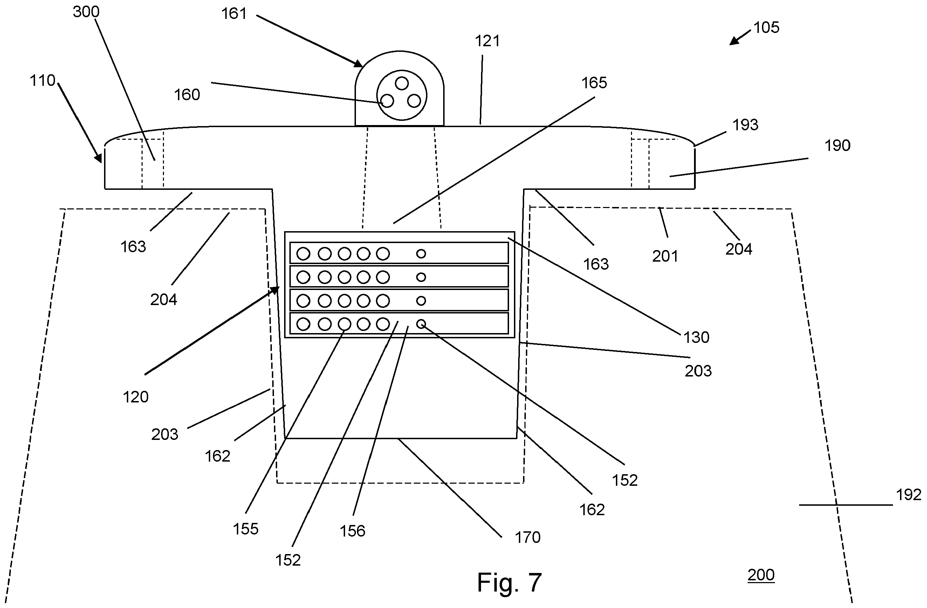

In the embodiments shown in figures 1 to 6, the tubular channel 130 is provided as a substantially circular tubular channel. In the embodiments shown in figures 1 to 6, as well as the embodiment in figures 7 to 8, this cross section may also be different than circular, like elliptic, rectangular, square even triangular of polygonal. The tubular channel 130 may be provided during the provision of the powerline carrier, e.g. when polymer or rubber is extruded. The tubular channel may as well be provided by introducing a tube, e.g. a polymer or steel tube, with the given cross section in the volume of the powerline carrier, or the rubber or polymer being extruded or cases around the tube.

In the embodiments shown in figures 1 to 6, in each case four power cables 151 and four data carrying cables 152 are shown. In the embodiments shown in figures 1 to 6, as well as the embodiment in figures 7 to 8, the number of power cables 151 and/or data carrying cables 152 may be different from four, like 1, 2, 3, 4, 5, 6, 7, 8 9, 10 or even more. The number of power cables 151 may be identical or different from the number of data carrying cables 152. The number of power cables 151 and/or data carrying cables 152 may be identical to or different from the number of power points 160 being accessible at the outer side 121 of the powerline carrier. The housings 160 may be provided with a closing lid or cover (not shown in figures 1 to 8), to close the housing when the power point is not used or is not in use, and/or to prevent access to the power point when closed. Between the housing and the cover or lid, a lock may be provided, which may be controlled by means of one or more of the data carrying cables in the powerline carrier.

The power cables each may carry a plurality of electrical conductors, mutually electrically insulated one from the other. Also the data carrying cables each may carry a plurality of electrical conductors, mutually electrically insulated one from the other.

Figure 7 shows a view of a traverse cross section of another powerline carrier 105 which is adapted to carry powerlines 150 on one or more curb stones according to the first aspect of the invention. This powerline carrier 105 is provided from one entire volume. The flanks 162 and 163 make an angle of 90° or more, e.g. up to 100° or 110°, while at the lower side, the flanks 162 are delimited and truncated by a lower flank 170. As such the part inserted in a recess in the curb stone has about a trapezoid shape. Also the recess in the curb stone has a trapezoid, similar shape. In the lower part of the volume, a rectangular tubular channel 130 is provided, in which four flat power lines 150 are provided. Each power line comprises 5 electrical conductors 155, which may be metal wires or cables, being mutually electrically insulated by an electrically insulating material 156. In the power lines, a data carrying cable 152 is embedded, which itself may comprise a plurality of mutually electrically separated electrical conductors, each being a wire of a cable. These flat power lines 150 may be staked one onto the other.

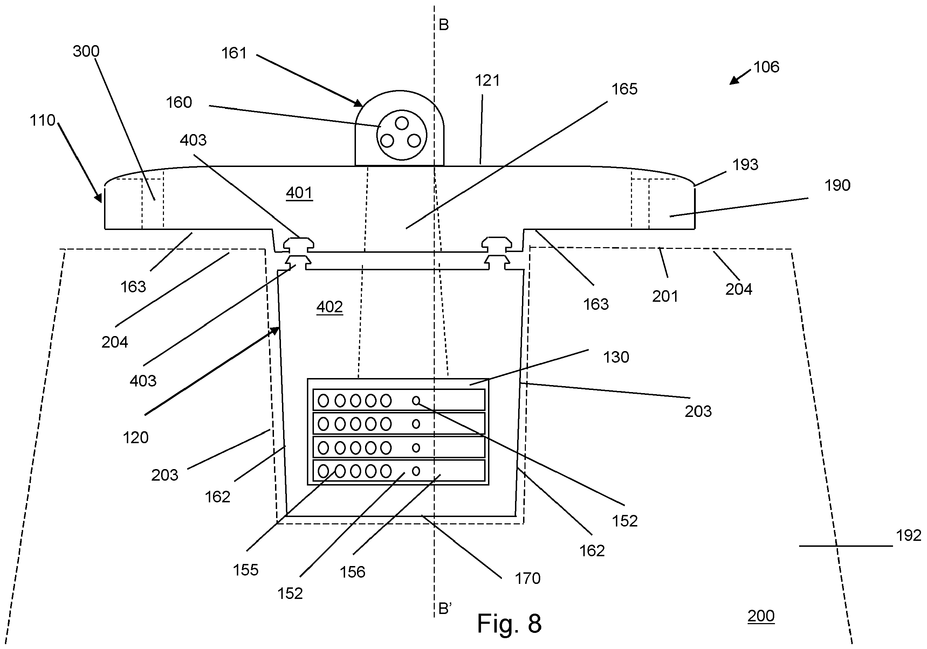

Figure 8 shows a view of a traverse cross section of another powerline carrier 106 which is adapted to carry powerlines 150 on one or more curb stones according to the first aspect of the invention. This powerline carrier 106 comprises a first, upper portion 401 and a second, lower portion 402, together forming the powerline carrier 104. This first, upper portion 401 and a second, lower portion 402 together form a kit of parts according to the second aspect of the invention. The first, upper portion 401 and a second, lower portion 402 being provided with snap connectors 403 to connect both portions. Further connection means, like e.g. glue, may be provided to connect the two portions. The two portions together form a powerline carrier 106 which may be similar, even identical to the powerline carrier 105 of figure 7.

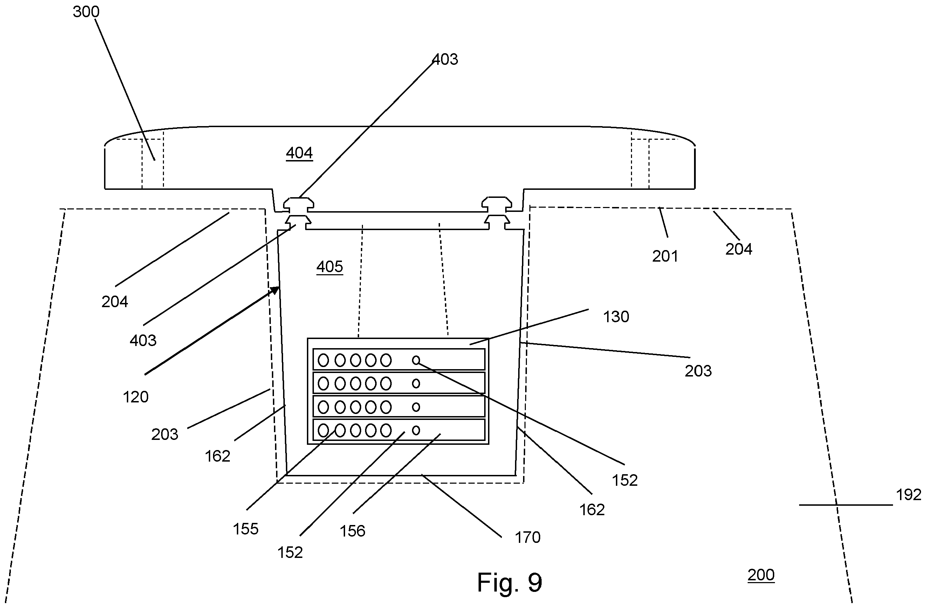

Figure 9 shows a view of a traverse cross section of a curb stone coverup 404 according to the 4th aspect of the invention. The cross section is similar to the cross section of the curb stone addon of figure 8, however the curb stone coverup 404 is free of a housing to receive a power point. This curb stone coverup 404 may be combined with a curb stone insert 405, which is identical to the lower, second portion 402 of the powerline carrier 106 of figure 8.

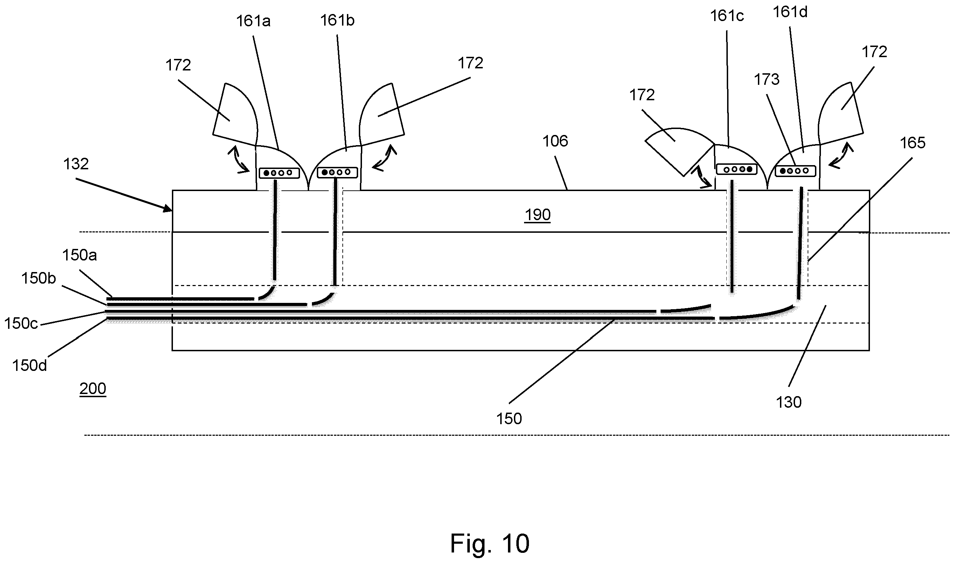

Figure 10 shows a longitudinal cross section of the powerline carrier 106 according to the plane BB'. Four power points are provided, in two pairs of two power points, each power point houses in a housing 161a, 161b, 161c and 161d. Each housing is closable by means of a closing lid 172 which is hingedly connected to the housing and can be watertight closed and optionally locked. Each housing 161a to 161d is also provided with a set of tell-tale lights 173, which may indicate the status of the power point in the housing. The tell-tale lights 173 and the lock on the closing lid 172, if provided, may be controlled by the control signals provided by the data carrying cable of the powerlines 150.

In the tubular channel 130 of the powerline carrier 106, the four power lines 150a, 150b, 150c and 150d are provided in this tubular channel between the transverse side 132 of the volume 190 and one of the housing 161a to 161d. The power line 150a being the upper power line in the stack of four power lines, extend from the transverse side 132 via the tubular channel 130 and the pass through opening 165, upto and into the housing 161a. Hence the upper positioned power line extends from the transverse side 132 via the tubular channel 130 and the pass through opening 165 to the power point and the accompanying housing being closest to the transverse side. The power line 150b being the next power line from top to bottom in the stack of four power lines, extend from the transverse side 132 via the tubular channel 130 and the pass through opening 165, up to and into the housing 161b. Hence the next power line from top to bottom in the stack of four power lines, extend from the transverse side 132 via the tubular channel 130 and the pass through opening 165 to the power point and the accompanying housing being in the next position positioned from the transverse side in the direction and sense away from the transverse side 132. The power line 150d being the lowermost power line in the stack of four power lines, extend from the transverse side 132 via the tubular channel 130 and the pass through opening 165, up to and into the housing 161d. Hence the lowermost positioned power line extends from the transverse side 132 via the tubular channel 130 and the pass through opening 165 to the power point and the accompanying housing being most far positioned from the transverse side. This ordering of the position of power lines and the housings coupled to each of them, allows a smooth and easy coupling without power lines being mixed up or crossing each other.

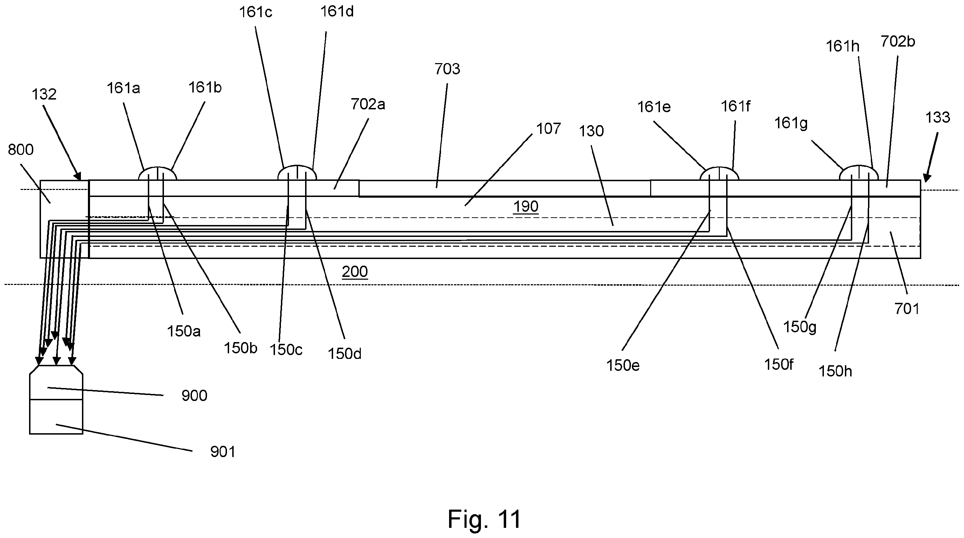

In another embodiment of a powerline carrier 107, one curb stone insert 701, similar to the curb stone insert 401 shown in figure 9, is provided and shown in figure 11. The powerline carrier 107 in this case comprises eight housings and eight power points 161a to 161h.

The curb stone insert 701 comprises eight stacked power lines 150a to 150h, ordered and stacked such that a next power line from top to bottom in the stack of four power lines, extend from the transverse side 132 via the tubular channel 130 to the housing being in the next position positioned from the transverse side in the direction and sense away from the transverse side 132. The outer, for the user and once installed visible side of the powerline carrier 107, is comprises two curb stone addons 702a and 702b identical the curb stone addon shown of figure 8. The two curb stone addons 702a and 702b are connected the curb stone insert 701 and in lateral direction mutually spaced by a curb stone coverup 703, being identical to the curb stone coverup 403 as shown in figure 9. At the transverse side 132, a bend element 800 is provided, in order to allow the power lines 150a to 150h to bend towards a side of the road or field from which the curb is part of, and thereby allows the power lines 150a to 150h to be electrically coupled to the power grid via a distribution means 900, like a distribution box. The data cables may also be connected to a control means 901, thereby allowing to control, based amongst others upon the data obtained via the data cables, the distribution of electrical power to one or more of the power points. These control means 901 and distribution means 900 may be housed in one and the same cabinet. The opposite transverse side 133, an end piece element 801 may be provided to amongst others close the tubular channel 130 if this channel also debouches at this second transverse side 133.

A method to install these powerline carriers, hence a method to provide integrated power points to a curb, comprises the provision of a curb having one or more than one adjacent curb stones. The curb stone or stones may be grinded or milled, to provide a wedge or recess on the top surface of the curb stone or stones, facing upwards. The first part of the powerline carrier, optionally being only the curb stone insert portion, is inserted and connected, e.g. glued to the sides of the curb stone or stones to be contacted. In case the powerline carrier is provided as a kit of parts, the curb stone addon or addons, and optionally the curb stone coverups, are connected to the curb stone insert. During the execution of these steps, or after having executed these steps, power points are coupled to the power lines, and these power points are provided in the corresponding houses.

In a similar way, the powerline carriers may as well be installed in a similar or identical way, in sides or surfaces of the curb stone being provided above the ground level, e.g. in side-surfaces or surfaces being non horizontal, e.g. inclined versus the horizontal.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A powerline carrier adapted to carry powerlines on one or more curb stones, said powerline carrier being an elongate volume, elongate in a longitudinal direction and having a transverse cross section adapted to be partially sunken in said one or more curb stones, the circumference of said transverse cross section comprises a first part adapted to contact the one or more curb stones, said section comprises a second part defining the outer side of the powerline carrier oriented away from the one or more curb stones, the powerline carrier comprises at least one housing for holding at least one, optionally only one power point, the power point being accessible at the outer side of the powerline carrier, said volume comprising at least a first tubular channel extending in said longitudinal direction, said first tubular channel having one outer end near or at one of the transverse sides of the volume, said first tubular channel is adapted to hold one or more power cables in the longitudinal direction of the powerline carrier, at least one cable or wire is provided in said first tubular channel between one of the transverse sides of the volume and one or more of the at least one housing.

2. A powerline carrier according to claim 1, wherein for each of the at least one housings, a pass through opening for conducting at least one power cable between the first tubular channel and the at least one housing is provided, said at least one cable or wire being provided in said pass through opening.

3. A powerline carrier according to any one of the preceding claims, wherein said at least one cables or wires are pull wires in said first tubular channel.

4. A powerline carrier according to any one of the preceding claims, wherein said at least one cables or wires are power cables in said first tubular channel.

5. A powerline carrier according to claim 4, wherein said powerline carrier comprises N housings for holding a power point, N being an integer equal or more than 1, said powerline carrier comprises N power cables in said first tubular channel.

6. A powerline carrier according to any one of the claims 4 to 5, wherein said power cables comprise a substantially rectangular outer circumference, the power cables being provided stacked in the first tubular channel.

7. A powerline carrier according to any one of the claims 4 to 6, wherein said powerline carrier or carriers, at the end of the powerline present at the housing, are provided with one or more plugs adapted to plug into a power point.

8. A powerline carrier according to any one of the preceding claims, wherein said powerline carrier comprises a power point in at least one of the at least one housing for holding a power point, optionally holding one power point in each of the at least one housing for holding a power point.

9. A powerline carrier according to any one of the preceding claims, wherein the at least one housing for holding a power point is provided with a closing lid, optionally hingedly connected to the housing, the closing lid being adapted to liquid tightly close the housing from the environment at the outer side of the powerline carrier, optionally between the housing and the closing lid, a lock is provided, preventing to open the closing lid without unlocking the lock.

10. A powerline carrier according to any one of the preceding claims, wherein said first part comprises at least two pairs of a first and a second segment, the segments of said pairs of segments being adapted to be brought in contact with the one or more curb stones, for each of said pairs of segments, the first and second segment form the legs of an angle oriented outwards the volume of the powerline carrier, which angle is equal or more than 90° and less than 180°.

11. A powerline carrier according to any one of the preceding claims, wherein said second part defining the outer side of the powerline carrier oriented away from the one or more curb stones is a curved outer side.

12. A powerline carrier according to any one of the preceding claims, wherein said power line carrier comprises polymeric material, such as natural or artificial and optionally recycled rubber.

13. A powerline carrier according to any one of the preceding claims, wherein said powerline carrier comprises is adapted to be rolled up on a coil,.

14. A kit of parts, said kit comprises an upper and a lower separatable portions, together forming the powerline carrier according to any one of the preceding claims.

15. A method to provide integrated power points to a curb, the method comprises the steps of
• Providing a curb comprising one or more curb stones having a wedge in the visible surface of the curb stone or curb stones;
• Providing a powerline carrier according to any one of the preceding claims;
• Coupling the powerline carrier to the one or more curb stones.
